# EUROPÄISCHE PATENTSCHRIFT

(11) **EP 0 627 450 B1**
(45) Veröffentlichungstag und Bekanntmachung des Hinweises auf die Patenterteilung: **15.10.1997**
(21) Anmeldenummer: 94107809.9
(22) Anmeldetag: 20.05.1994
(51) Int. Cl.: C08F 220/04, C08F 220/12, C08F 261/04, C09D 7/00

(54) **Carboxylgruppenhaltige Copolymerisate in wässriger Dispersionsform oder redispergierbarer Pulverform und ihre wasserlöslichen Salze, Verfahren zu ihrer Herstellung und ihre Verwendung als Verdicker in wässrigen Zubereitungen**
Copolymers containing carboxyl groups in the form of aqueous dispersions or in the form of redispersible powders and their water-soluble salts, process for their preparation and their use as thickewer in aqueous compositions
Copolymères contenant des groupes carboxyliques sous forme de dispersions aqueuses ou sous forme de poudre redispersible et leurs sels solubles dans l'eau, procédé de leur préparation et leur utilisation comme agent éepaississants dans compositions aqueuses

(30) Priorität: 29.05.1993 DE 4318033
(43) Veröffentlichungstag der Anmeldung: 07.12.1994
(73) Patentinhaber: HOECHST AKTIENGESELLSCHAFT, 65926 Frankfurt am Main (DE)
(72) Erfinder: Kuropka, Rolf, Dr., D-65812 Bad Soden (DE)

(56) Entgegenhaltungen:
- EP-A- 0 450 437

## Beschreibung

Die Erfindung betrifft Copolymerisate sowie Verfahren zu ihrer Herstellung auf der Basis von ethylenisch ungesättigten und radikalisch copolymerisationsfähigen Monomeren, deren Makromoleküle mindestens 21 Gew.-%, vorzugsweise mindestens 25 Gew.-%, Carboxylgruppen tragende Monomereinheiten enthalten und durch radikalisch initiierte Emulsionscopolymerisation unter Mitverwendung von wasserlöslichem Polyvinylalkohol (PVA) oder Polyvinylpyrrolidon (PVP) in wäßriger Dispersionsform hergestellt und gegebenenfalls anschließend durch Wasserentzug, vorzugsweise durch Sprühtrocknung, als redispergierbare Copolymerisatpulver gewonnen wurden, und die Verwendung der Copolymerisate unter Umwandlung in ihre wasserlöslichen Salzformen als Verdickungsmittel mit überraschend vorteilhafter rheologiemodifizierender Wirkung in wäßrigen Systemen.

Es ist bekannt, Copolymerisate auf der Basis von (Meth)Acrylsäureestern/(Meth)Acrylsäure in Form ihrer wasserlöslichen Salze als Verdickungsmittel in wäßrigen Systemen einzusetzen (vgl. beispielsweise R.N. Hildred, Polym. Paint Colour Journal 1990, 180, Seiten 579 bis 583). Ein bevorzugtes Herstellungsverfahren für diese Copolymerisate ist die Emulsionspolymerisation bei niedrigen pH-Werten, wobei die Produkte im allgemeinen als wäßrige Latices in ihrer Säureform erhalten werden und anschließend durch Neutralisation in eine wasserlösliche Salzform überführt werden können. Das Quell- beziehungsweise Löslichkeitsverhalten der wäßrigen Latices bei der Neutralisation und der damit verbundene Verdickereffekt wird stark beeinflußt durch den Gehalt der Copolymerisate an Carboxylgruppen tragenden Monomereinheiten sowie durch die Eigenschaftsmerkmale der übrigen Comonomereinheiten. Es gilt hierbei im allgemeinen die Regel, daß die Quelleigenschaften und damit die Verdickerwirkung der Dispersionscopolymerisate um so besser sind, je niedriger ihre Glastemperatur (T_{G}) und je höher ihre Hydrophilität sind. Diesbezüglich bevorzugte Copolymerisate mit bekanntermaßen vorteilhaften Verdickereigenschaften sind auf der Basis von Ethylacrylat in copolymerer Kombination mit Methacrylsäure aufgebaut. Ein großer Nachteil von Ethylacrylat besteht jedoch darin, daß es in seiner monomeren Form eine sehr niedrige Geruchsschwelle (ca. 0,0005 ppm, vergleichbar dem Ethylmercaptan) und einen ausgeprägt unangenehmen Geruch besitzt, was bei seiner Verwendung als Monomeres in wäßrigen Latexdispersionen sowohl bei der Herstellung als auch bei der Verarbeitung der Dispersionen zu erheblichen Umweltproblemen und zu schädlichen Auswirkungen auf Menschen führen kann. Nicht zuletzt aus ökologischen Gründen besteht daher ein dringliches Bedürfnis, auf andere comonomere Kombinationen, die diese Nachteile nicht besitzen, wie beispielsweise Methylmethacrylat und Methacrylsäure, auszuweichen. Verdicker aus Copolymerisaten auf der Basis von Methylmethacrylat und Methacrylsäure sind zwar ebenfalls bekannt, sie besitzen aber, unter anderem aufgrund ihrer hohen T_{G}, sehr schlechte Quelleigenschaften bei der Neutralisation ihrer sauren Form mit Alkalien.

Schlechte Quelleigenschaften der Copolymerisate führen häufig zu unbefriedigender rheologiemodifizierender Wirkung bei der Anwendung. Ein weiterer Nachteil von Verdickercopolymerisaten auf der Basis von Methylmethacrylat/Methacrylsäure ist das Auftreten des sogenannten Weißenbergeffektes. Neutralisiert man konzentrierte saure Verdickerdispersionen unter Rühren, so zieht sich bei schlechten Quelleigenschaften des Copolymerisats die entstehende Verdickerlösung unter Gelbildung an der Rührwelle hoch. Eine weitere Verarbeitung solcher Verdickerlösungen ist dann nicht mehr möglich.

Der Erfindung lag somit die Aufgabe zugrunde, als Verdicker für wäßrige Systeme solche Copolymerisate verfügbar zu machen, die in ihrer Säureform stabile wäßrige Dispersionen sowie gegebenenfalls wasserdispergierbare trockene Pulver bilden können, die bei der Neutralisation in wäßrigen Systemen ein gutes Quellverhalten ohne Weißenbergeffekt zeigen, auf der Basis von (Meth)Acrylsäureestern/(Meth)Acrylsäure gegebenenfalls vorzugsweise auch ohne die Mitverwendung des geruchsproblematischen Ethylacrylats durch Emulsionscopolymerisation in wäßriger Dispersionsform erhältlich sind und keine die Umwelt belastenden Eigenschaften besitzen.

Es wurde nun überraschenderweise gefunden, daß man als Verdicker geeignete Dispersionscopolymerisate der gewünschten Art erhalten kann, wenn man copolymerisationsfähige Monomere aus ethylenisch ungesättigten Carbonsäuren oder ethylenisch ungesättigten Carbonsäureanhydriden mit Methacrylsäureestern oder Acrylsäureestern von aliphatischen (C₁-C₂₂)-Alkoholen in einem wäßrigen Medium in Gegenwart von Polyvinylalkohol (PVA) oder Polyvinylpyrrolidon (PVP) in solchen Mischungsverhältnissen radikalisch copolymerisiert, daß das resultierende Copolymerisat mindestens 21 Gew.-% Carboxylgruppen tragende Monomereinheiten, bezogen auf das Copolymerisat, enthält und in seiner Säureform als stabile wäßrige Dispersion erhalten werden kann, aus der das VerdickerCopolymerisat gegebenenfalls durch Wasserentzug auch in einer trockenen, redispergierbaren Pulverform isoliert werden kann.

Die ausgeprägten viskositätssteigernden Eigenschaften und das gute Quellverhalten erfindungsgemäßer wasserlöslicher Copolymerisatsalze in wäßrigen Systemen ist überraschend und aus dem Stand der Technik nicht herleitbar. So sind aus der EP 0 450 437 A2 Copolymerisate auf der Basis von (C₁-C₈)-Alkylacrylaten und ethylenisch ungesättigten Carbonsäuren sowie ihre Herstellung durch radikalisch initiierte Emulsions- oder Lösungscopolymerisation in Gegenwart von Polyvinylalkohol bekannt, wobei die resultierenden Copolymerisate 5 bis 20 Gew.-% Carboxylgruppen tragende Monomereinheiten und 2 bis 60 Gew.-% Polyvinylalkohol enthalten. Diese Copolymerisate können bei der Herstellung durch Emulsionscopolymerisation in ihrer Säureform offensichtlich keine stabilen wäßrigen Dispersionen bilden und werden in den Ausführungsbeispielen sogleich nach ihrer Herstellung durch Zusatz von Basen bei 50 bis 85 °C teilweise oder vollständig in wasserlösliche Salzformen überführt und ausschließlich als Schlichtemittel verwendet, wobei sie auf geschlichteten Filamentfäden vorteilhafterweise keine Blocking-Neigung zeigen. Ein weiterer wesentlicher Vorteil dieser bei der Emulsionspolymerisation in der Säureform erhältlichen Copolymerisate wird in der EP-Druckschrift darin gesehen, daß sie in wäßrigen Medien bei der Neutralisation mit Alkalien, Erdalkalien oder Ammoniak keinen großen Viskositätszuwachs bewirken und damit keine wesentliche Verdickungswirkung zeigen, was bei ihrer Verwendung als Schlichtemittel als besonders vorteilhaft erachtet wird.

Gegenstand der Erfindung sind daher Copolymerisate auf der Basis von ethylenisch ungesättigten und radikalisch copolymerisationsfähigen Monomeren, deren Makromoleküle Carboxylgruppen tragende Monomereinheiten enthalten und unter Mitverwendung von wasserlöslichem Polyvinylalkohol (PVA) oder anderen wasserlöslichen organischen Schutzkolloiden durch radikalisch initiierte Emulsionscopolymerisation hergestellt worden sind und in einer wäßrigen Dispersionsform mit einem Feststoffgehalt von vorzugsweise 10 bis 50 Gew.-%, insbesondere 20 bis 40 Gew.-%, oder in getrockneter redispergierbarer Pulverform vorliegen, wobei die Carboxylgruppen der Copolymerisate auch teilweise oder vollständig in eine wasserlösliche Salzform überführt sein können, in der sie in wäßrigen Medien eine verdickende und rheologiemodifizierende Wirkung entfalten können, dadurch gekennzeichnet, daß sie, jeweils bezogen auf das Copolymerisat,
a) 0,1 bis 25 Gew.-%, vorzugsweise 5 bis 15 Gew.-%, Bestandteile aus wasserlöslichem Polyvinylalkohol (PVA), der bei der Copolymerisatbildung durch Pfropfpolymerisation entstandene polymere Seitenketten enthalten kann, oder aus Gemischen aus mindestens 50 Gew.-%, vorzugsweise mindestens 60 Gew.-%, bezogen auf das Gemisch, wasserlöslichem PVA, der durch Pfropfpolymerisation gebildete polymere Seitenketten enthalten kann, und einer oder mehreren der nachstehend unter 1) bis 4) genannten Komponenten, nämlich
   1) wasserlöslicher modifizierter Cellulose, vorzugsweise aus der Gruppe Hydroxyethylcellulose, Carboxymethylcellulose, Carboxymethylhydroxyethylcellulose, Methylhydroxyethylcellulose, oder
   2) wasserlöslichen Polymeren aus N-Vinylamidverbindungen, vorzugsweise Polyvinylpyrrolidon (PVP), das bei der Copolymerisatbildung durch Pfropfpolymerisation entstandene polymere Seitenketten enthalten kann, oder
   3) wasserlöslichen polymeren, copolymeren oder blockcopolymeren Polyalkylenoxiden, vorzugsweise des Ethylenoxids und/oder des Propylenoxids, oder
   4) wasserlöslichen, durch Isocyanatverbindungen modifizierten oder acetoacetoxylierten Polyvinylalkoholen, oder
a₁) anstelle der Komponente a), 0,1 bis 25 Gew.-%, vorzugsweise 5 bis 15 Gew.-%, Bestandteile aus wasserlöslichem Polyvinylpyrrolidon (PVP), das bei der Copolymerisatbildung durch Pfropfpolymerisation entstandene polymere Seitenketten enthalten kann, und
b) 21 bis 98.9 Gew.-%, vorzugsweise 25 bis 64 Gew.-%, Monomereinheiten aus Carboxylgruppen tragenden ethylenisch ungesättigten Monomeren, und
c) 1 bis 78.9 Gew.-%, vorzugsweise 30 bis 69 Gew.-%, Monomereinheiten aus Methacrylsäureestern oder Acrylsäureestern von aliphatischen (C₁-C₂₂)-Alkoholen, und
d) 0 bis 40 Gew.-%, vorzugsweise 0,1 bis 20 Gew.-%, Monomereinheiten aus ethylenisch ungesättigten Comonomeren, die von den vorgenannten Komponenten b) und c) verschieden sind, vorzugsweise (C₃-C₂₄)-Vinylestern, Vinylaromaten, ethylenisch ungesättigten Nitrilen, ethylenisch ungesättigten Monocarbonsäure-(C₁-C₂₂)alkylestern oder Dicarbonsäuredi-(C₁-C₂₂)-alkylestern, ethylenisch ungesättigten Sulfonsäuren oder -Sulfonsäurederivaten, und
e) 0 bis 25 Gew.-%, vorzugsweise 0,1 bis 15 Gew.-%, Monomereinheiten aus ethylenisch ungesättigten grenzflächenaktiven Comonomeren, vorzugsweise grenzflächenaktiven Crotonsäureestern, und
f) 0 bis 5 Gew.-%, vorzugsweise 0,01 bis 2 Gew.-%, Monomereinheiten aus mehrfach ethylenisch ungesättgiten Comonomeren, vorzugsweise aus der Gruppe Divinylbenzol, Diallylphthalat, Butandioldiacrylat, Butandioldimethacrylat, und
g) 0 bis 5 Gew.-%, vorzugsweise 0,1 bis 1,5 Gew.-%, Molekulargewichtsregler, vorzugsweise aus der Gruppe Dodecylmercaptan, Thiophenolderivate, Tetrakismercaptoacetylpentaerythrit, Tetrachlorkohlenstoff und Bromtrichlormethan, enthalten,
und die Copolymerisate in ihrer sauren Form oder ihrer teilweisen Salzform als wäßrige Latexdispersionen oder als getrocknete redispergierbare Pulver, oder in ihrer wasserlöslichen teilweisen oder vollständigen Salzform als wäßrige Lösungen oder als wäßrige Gele oder als getrocknete wasserlösliche Pulver vorliegen.

Bevorzugt liegen die Copolymerisate in ihrer Säureform oder in einer teilweise oder vollständig mit Alkali-, Erdalkali- oder Ammoniumbasen neutralisierten wasserlöslichen oder in Wasser kolloidal dispergierbaren Form vor, insbesondere als Natriumsalze, Kaliumsalze, Ammoniumsalze oder Morpholinsalze.

Weiterer Gegenstand der Erfindung ist ein Verfahren zur Herstellung der vorstehend beschriebenen Copolymerisate durch radikalische Emulsionscopolymerisation von ethylenisch ungesättigten copolymerisationsfähigen Verbindungen in einem wäßrigen Medium bei einer Temperatur von vorzugsweise 5 bis 100 °C, insbesondere 50 bis 90 °C, unter Mitverwendung von in dem vorgelegten wäßrigen Medium gelöstem wasserlöslichem Polyvinylalkohol (PVA) oder anderen wasserlöslichen organischen Schutzkolloiden, in Gegenwart von radikalbildenden Polymerisationsinitiatoren, Emulgatoren, gegebenenfalls weiteren Schutzkolloiden, gegebenenfalls Molekulargewichtsreglern und gegebenenfalls nachfolgender teilweiser oder vollständiger Neutralisation der freien Säuregruppen der Copolymerisate und Gewinnung der Copolymerisate als wäßrige Dispersionen oder als wäßrige Lösungen oder, nach Entfernung des Wasseranteils, als wasserdispergierbare oder wasserlösliche Pulver, dadurch gekennzeichnet, daß man die Ausgangsverbindungen in den nachstehenden Mengen, jeweils bezogen auf die Gesamtmenge der Ausgangskomponenten ohne den Wasseranteil, einsetzt, und zwar
a) 0,1 bis 25 Gew.-%, vorzugsweise 5 bis 15 Gew.-%, wasserlöslichen Polyvinylalkohol (PVA) oder Gemische aus mindestens 50 Gew.-%, vorzugsweise mindestens 60 Gew.-%, bezogen auf das Gemisch, wasserlöslichem PVA und einer oder mehreren der nachstehend unter 1) bis 4) genannten Komponenten, nämlich
   1) wasserlöslicher modifizierter Cellulose, vorzugsweise aus der Gruppe Hydroxyethylcellulose, Carboxymethylcellulose, Carboxymethylhydroxyethylcellulose, Methylhydroxyethylcellulose, oder
   2) wasserlöslichen Polymeren aus N-Vinylamidverbindungen, vorzugsweise Polyvinylpyrrolidon (PVP), oder
   3) wasserlöslichen polymeren, copolymeren oder blockcopolymeren Polyalkylenoxiden, vorzugsweise des Ethylenoxids und/oder des Propylenoxids, oder
   4) wasserlöslichen, durch Isocyanatverbindungen modifizierten oder acetoacetylierten Polyvinylalkoholen,
   gelöst in dem als Vorlage verwendeten wäßrigen Medium, vorzugsweise als 0,5 bis 15 Gew.-%ige, insbesondere 1,5 bis 10 Gew.-%ige, wäßrige Lösungen, oder
a₁) anstelle der Komponente a) 0,1 bis 25 Gew.-%, vorzugsweise 5 bis 15 Gew.-%, wasserlösliches Polyvinylpyrrolidon (PVP), gelöst in dem als Vorlage verwendeten wäßrigen Medium, vorzugsweise als 0,5 bis 15 Gew.-%ige, insbesondere 1,5 bis 10 Gew.-%ige, wäßrige Lösungen, und
b) 21 bis 98,9 Gew.-%, vorzugsweise 25 bis 64 Gew.-%, Monomere aus Carboxylgruppen tragenden ethylenisch ungesättigten copolymerisationsfähigen Verbindungen, und
c) 1 bis 78,9 Gew.-%, vorzugsweise 30 bis 69 Gew.-%, Methacrylsäureester oder Acrylsäureester von aliphatischen (C₁-C₂₂)-Alkoholen oder deren Gemische, und
d) 0 bis 40 Gew.-%, vorzugsweise 0,1 bis 20 Gew.-%, ethylenisch ungesättigte copolymerisationsfähige Verbindungen, die von den vorgenannten Komponenten b) und c) verschieden sind, vorzugsweise (C₃-C₂₄)-Vinylester, Vinylaromaten, ethylenisch ungesättigte Nitrile, ethylenisch ungesättigte Monocarbonsäure(C₁-C₂₂)-alkylester oder Dicarbonsäuredi-(C₁-C₂₂)alkylester, ethylenisch ungesättigte Sulfonsäuren oder -Sulfonsäurederivate, und
e) 0 bis 25 Gew.-%, vorzugsweise 0,1 bis 15 Gew.-%, ethylenisch ungesättigte copolymerisationsfähige grenzflächenaktive Verbindungen, vorzugsweise Crotonsäureester, und
f) 0 bis 5 Gew.-%, vorzugsweise 0,01 bis 2 Gew.-%, mehrfach ethylenisch ungesättigte copolymerisationsfähige Verbindungen, die vernetzend wirken können, vorzugsweise aus der Gruppe Divinylbenzol, Diallylphthalat, Butandioldiacrylat, Butandioldimethacrylat, und
g) 0 bis 5 Gew.-%, vorzugsweise 0,1 bis 1,5 Gew.-%, Molekulargewichtsregler, vorzugsweise aus der Gruppe der molekulargewichtserniedrigend wirkenden Verbindungen, insbesondere Dodecylmercaptan, Thiophenolderivate, Tetrakismercaptoacetylpentaerythrit, Tetrachlorkohlenstoff und Bromtrichlormethan,
wobei man das PVA beziehungsweise PVP enthaltende wäßrige Medium a) beziehungsweise a₁), dem außerdem anionische und gegebenenfalls nichtionische Emulgatoren, gegebenenfalls weitere Schutzkolloide und radikalbildende Polymerisationsinitiatoren zugesetzt sind, in einem Rührreaktor bei der Polymerisationstemperatur vorlegt, die Komponenten b) bis g) separat oder als Mischung oder als wäßrige Emulsion nach Maßgabe des Polymerisationsverlaufs und gegebenenfalls in mehreren aufeinanderfolgenden Stufen zudosiert, gegebenenfalls zusammen mit weiteren Anteilen der Polymerisationsinitiatoren und gegebenenfalls weiteren Emulgatoranteilen, wobei wasserlösliche Ausgangsmonomere auch teilweise oder vollständig in der wäßrigen Vorlage gelöst sein können, die Copolymerisationsreaktion unter Bildung einer wäßrigen Copolymerisatdispersion zu Ende führt und die Copolymerisate in ihrer Säureform als wäßrige Dispersionen mit einem Feststoffgehalt von vorzugsweise 10 bis 50 Gew.-%, insbesondere 20 bis 40 Gew.-%, bezogen auf die wäßrige Dispersion, gewinnt, oder gegebenenfalls die letzteren durch Wasserentzug, vorzugsweise durch Sprühtrocknung, in ein trockenes redispergierbares Copolymerisatpulver überführt, oder gegebenenfalls die Dispersion durch Zusatz von basischen Verbindungen, vorzugsweise Alkaliverbindungen, Ammoniak oder Morpholin, teilweise oder vollständig neutralisiert und gegebenenfalls durch Wasserentzug, vorzugsweise durch Sprühtrocknung, in trockene, teilweise oder vollständig neutralisierte wasserlösliche oder kolloidal wasserlösliche Copolymerisatpulver überführt.

Die Emulsionscopolymerisation wird nach üblichen Methoden, vorzugsweise bei Temperaturen von 5 bis 100 °C, insbesondere 50 bis 90 °C, besonders bevorzugt bei 75 bis 85 °C, durchgeführt.

Zur Initiierung der Emulsionspolymerisation werden vorzugsweise übliche, Radikalketten startende, insbesondere wasserlösliche, Initiatoren in Mengen von 0,01 bis 2 Gew.-%, bezogen auf die Gesamtmenge aller Comonomeren, eingesetzt.

Besonders geeignet hierfür sind beispielsweise Alkali- oder Ammoniumpersulfat, H₂O₂, tert.-Butylhydroperoxid, übliche Redoxkatalysatoren, 4,4'-Azobis-(4-cyanovaleriansäure), ferner energiereiche Strahlen sowie übliche Photoinitiatoren.

Zur Steigerung der Verdickerkapazität beziehungsweise zur weiteren Beeinflussung der rheologischen Eigenschaften und Wirksamkeit von gelösten erfindungsgemäßen Copolymerisaten in wäßrigen Systemen kann es in manchen Fällen vorteilhaft sein, wenn bei der Copolymerisation mehrfach ethylenisch ungesättigte Monomere, vorzugsweise aus der vorstehend beschriebenen monomeren Komponentengruppe f), als Comonomere mitverwendet werden, um höhere Molekulargewichte bei den Copolymerisaten zu erzielen. Als solche vernetzend wirkenden und zu Molekulargewichtserhöhungen führenden Comonomeren werden vorzugsweise die vorstehend unter f) genannten Verbindungen sowie auch Allylmethacrylat oder Ethlyenglykoldimethacrylat verwendet. Die eingesetzten Mengen können vorzugsweise in einem Bereich zwischen 0 und 5 Gew.-%, bezogen auf die gesamte Comonomerenmenge, liegen und können insbesondere 0,01 bis 2 Gew.-%, besonders bevorzugt 0,1 bis 0,5 Gew.-%, betragen. Die mehrfach ethylenisch ungesättigten Comonomeren können bei der Copolymerisation Molekülverzweigungen und Netzwerke bilden, die nach der partiellen oder vollständigen Neutralisation des Copolymerisats zur Bildung von Gelstrukturen und damit zur Ausbildung spezifischer und für manche Anwendungen vorteilhafter rheologischer Eigenschaftsprofile in wäßrigen Systemen führen können.

Durch die Mitverwendung von Molekulargewichtsreglern aus der vorstehend beschriebenen Komponentengruppe g) während der Copolymerisation können die Molekulargewichte der Copolymerisate erniedrigt werden. Mit sinkenden Molekulargewichten der Copolymerisate vermindert sich aber die Verdickungswirkung neutralisierter Copolymerisate in wäßrigen Systemen und die Viskositäten vergleichbarer wäßriger Lösungen von teilweise oder vollständig neutralisierten Copolymerisaten werden mit fallenden Molekulargewichten niedriger, vergleichsweise zu Copolymerisaten, die ohne Molekulargewichtsregler hergestellt wurden. Man kann jedoch mit Hilfe der Molekulargewichtsregler die Möglichkeiten verbessern, das Gleichgewicht zwischen der Viskosität der neutralisierten Copolymerisate in wäßrigen Systemen bei hoher und bei niedriger Scherbeanspruchung zu harmonisieren und für spezielle Anwendungen gezielt einzustellen. Obgleich die Molekulargewichte erfindungsgemäßer Copolymerisate, insbesondere nach oben hin, keiner besonderen Begrenzung unterliegen, so liegen sie im unteren Bereich jedoch vorzugsweise oberhalb von 10000 g/mol, insbesondere oberhalb von 30000 g/mol.

Als molekulargewichtserniedrigend wirkende Regler bei der Copolymerisation kommen prinzipiell alle Verbindungen infrage, welche Radikale übertragende Eigenschaften besitzen. Vorzugsweise werden dafür die vorstehend unter der Komponentengruppe g) beschriebenen Verbindungen verwendet. Besonders bevorzugt werden monofunktionelle oder mehrfachfunktionelle Merkaptane verwendet. Bevorzugt sind ferner beispielsweise auch Thioglykolsäure, α-Methylstyrol, Toluol. Die eingesetzte Menge an Regler kann vorzugsweise im Bereich zwischen 0 und 5 Gew.-%, bezogen auf die gesamte Comonomerenmenge, liegen und kann insbesondere 0,05 bis 2 Gew.-%, besonders bevorzugt 0,1 bis 1,5 Gew.-%, betragen.

Durch die Mitverwendung von ethylenisch ungesättigten copolymerisationsfähigen grenzflächenaktiven Comonomeren aus der vorstehend beschriebenen Komponentengruppe e) während der Copolymerisation von erfindungsgemäß hergestellten Copolymerisaten beziehungsweise Copolymerisatsalzen kann die Abhängigkeit der Verdickungseigenschaften der letzteren in wäßrigen Systemen vom Schergefälle deutlich verringert werden, vergleichsweise zu erfindungsgemäßen Copolymerisaten beziehungsweise Copolymerisatsalzen, die ohne grenzflächenaktive Comonomere der Komponentengruppe e) hergestellt worden sind.

Als Komponenten der Gruppe e) kommen vorzugsweise grenzflächenaktive Ester der Methacrylsäure und der Acrylsäure der allgemeinen Formlen I und II und insbesondere grenzflächenaktive Crotonsäureester der allgemeinen Formel III in den vorstehend angegebenen Mengen infrage, wobei die Reste und Indices in den Formlen I, II und III jeweils folgende Bedeutungen haben: 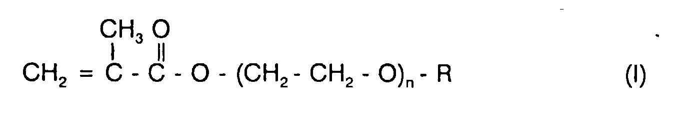 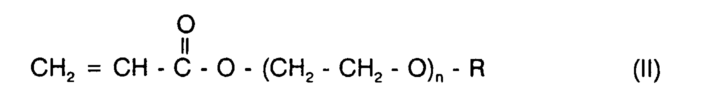 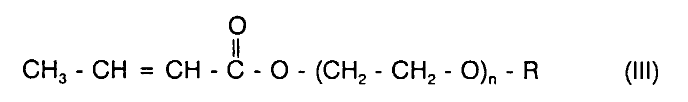
- n =: eine Zahl von 2 bis 100,
- R =: einen aliphatischen (C₂-C₃₀)-Rest, der linear oder verzweigt sein kann, einen Mono-, Di- oder Trialkylphenylrest mit Alkylgruppen von jeweils 4 bis 12 C-Atomen, einen blockcopolymeren Rest der Formeln IVa oder IVb, 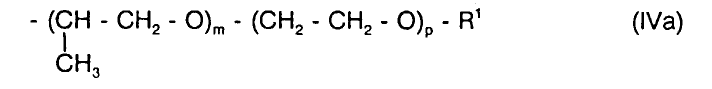 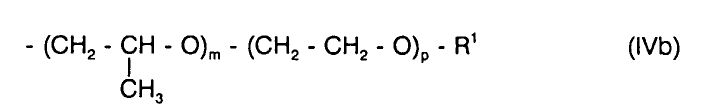 in denen m eine Zahl von 10 bis 100, p eine Zahl von 0 bis 100, vorzugsweise 1 bis 30, und
R¹ = H, (C₁-C₂₀)-Alkyl, Phenyl, Alkylphenyl mit (C₁-C₂₀)-Alkylgruppen oder einen perfluorierten oder teilweise fluorierten (C₁-C₁₆)-Alkylrest darstellen.

In manchen Fällen kann es zweckmäßig sein, daß man die grenzflächenaktiven Comonomeren der Komponentengruppe e) bei der Emulsionscopolymerisation in der Wasserphase vorlegt.

Als Komponenten der Gruppe d) kommen vorzugsweise (C₃-C₂₄)-Vinylester, insbesondere Vinylacetat und Vinyl-(C₈-C₁₂)-carbonsäureester, Styrol, Vinyltoluol, Acrylnitril, Methacrylnitril, Allylalkohol, (C₄-C₂₂)-Allyläther, ethylenisch ungesättigte Dicarbonsäuredi-(C₁-C₂₂)-alkylester, vorzugsweise Maleinsäuredibutylester, ethylenisch ungesättigte Sulfonsäuren oder -Sulfonsäurederivate, vorzugsweise Vinylsulfonsäure oder deren Alkalisalze infrage.

Als Komponenten der Gruppe c) kommen vorzugsweise Methacrylsäure-(C₁-C₈)-alkylester und/oder Acrylsäure(C₁-C₈)-alkylester, insbesondere die Methyl- und n-Butylester, infrage. Bei Verwendung von Ethylacrylat wird die Emulsionscopolymerisation in zumindest zwei Stufen durchgeführt. Dabei wird in der ersten Stufe ein Comonomerengemisch eingesetzt, das die Gesamtmenge des comonomeren Ethylacrylats enthält, während in der zweiten Stufe und gegebenenfalls weiteren Stufen Comonomerengemische ohne Ethylacrylat eingesetzt werden. Durch eine solche Verfahrensweise kann überraschenderweise erreicht werden, daß die resultierende Copolymerisatdispersion weitgehend frei ist von restmonomerem Ethylacrylat und damit weitgehend frei von dessen unangenehmen Geruch.

Der Anteil der zu verwendenden ethylacrylatfreien Comonomerenmenge für die zweite Stufe und gegebenenfalls weitere Stufen der Emulsionscopolymerisation beträgt dabei vorzugsweise insgesamt mindestens 4 Gew.-%, insbesondere insgesamt mindestens 10 Gew.-%, bezogen auf die Gesamtmenge aller eingesetzten Comonomeren.

Als Komponenten der Gruppe b) kommen vorzugsweise Methacrylsäure, Acrylsäure, Crotonsäure, Maleinsäuremono(C₁-C₈)-alkylester, Maleinsäure, Fumarsäure, Itaconsäure und gegebenenfalls Maleinsäureanhydrid infrage, wobei gegebenenfalls im resultierenden Copolymerisat enthaltene Monomereinheiten aus Maleinsäureanhydrid für die rheologiewirksame Salzbildung zunächst hydrolytisch in Maleinsäureeinheiten oder Maleinsäurehalbestereinheiten umzuwandeln sind. Besonders bevorzugt sind Methacrylsäure und Acrylsäure.

Erfindungsgemäß kann bei der Durchführung der Emulsionscopolymerisation nach üblichen Methoden verfahren werden. Dabei können übliche anionische und/oder nichtionogene Emulgatoren zur Emulgierung der Monomeren und Stabilisierung der resultierenden Latices eingesetzt werden.

Bei der Auswahl von Art und Mengenverhältnissen der Comonomeren (a) bis (g) sind unter anderem folgende Gesichtspunkte zu beachten. Die Verwendung der als Komponente (b) aufgeführten ungesättigten Carbonsäuren in den erfindungsgemäßen Mengen trägt dazu bei, die leichte Dispergierbarkeit der erfindungsgemäßen Copolymerisate in wäßriger Dispersion zu gewährleisten. In teilweise oder vollständig neutralisierter Form trägt die Komponente (b) außerdem unter anderem entscheidend zur Erzielung der Wasserlöslichkeit beziehungsweise der wäßrig-kolloidalen Dispergierbarkeit der erfindungsgemäßen Copolymerisatsalze sowie insbesondere zu deren Verdickerwirkung in wäßrigen Systemen bei.

Zu berücksichtigen ist ferner, daß bei den jeweils verwendeten Comonomeren eine Copolymerisation untereinander prinzipiell möglich sein muß und daß sie auch tatsächlich erfolgt. Im einfachsten Fall läßt sich dies unter Zuhilfenahme der Copolymerisationsparameter beziehungsweise der Q- und e-Werte abschätzen (vgl. beispielsweise B.Brandrup, Immergut, Polymer Handbook, 2nd ed. (1975), John Wiley & Sons, New York). Unter Umständen muß bei der Auswahl bestimmter Comonomerer (a) - (g) das Monomerenmischungsverhältnis danach ausgewählt werden, wie eine Copolymerisation und gleichzeitige Pfropfungsreaktionen auf den Komponenten a) beziehungsweise a₁) durch Variation des Syntheseverfahrens und unter anderem speziell der Art und Weise der Monomerendosierung möglich sind. So können sich gegebenenfalls Copolymerisationen unter Umständen dadurch erzwingen lassen, daß man eine oder mehrere Monomerkomponenten vorlegt und das übrige Monomere beziehungsweise die übrige Monomermischung erst im Verlauf der Polymerisation zudosiert. Im Falle der Emulsionspolymerisation kann es in diesem Zusammenhang von entscheidender Bedeutung sein, ob das Monomere für sich allein oder als wäßrige Emulsion zudosiert wird. Das gleiche gilt hier auch für die Art der Emulgatorzugabe. Es können dabei Unterschiede hinsichtlich Teilchengröße, Teilchengrößenverteilung, Stabilität der Copolymerisatdispersion sowie des Ausmaßes der Pfropfungsreaktionen beobachtet werden, beispielsweise in Abhängigkeit davon, ob der Emulgator vorgelegt wird oder ob er während der Copolymerisation zudosiert wird.

Bevorzugte anionische Emulgatoren sind bei der Herstellung anionischer Emulsionscopolymerisate beispielsweise grenzflächenaktive Alkylsulfate, Alkylsulfonate, Alkylarylsulfate, Alkylarylsulfonate, Alkali- und/oder Ammoniumsalze von Alkylbeziehungsweise Alkylarylmono- oder -polyglykolethersulfaten.

Bevorzugte nichtionogene Emulgatoren sind beispielsweise tensioaktive oxethylierte Fettalkohole oder oxethylierte Alkylphenole. Der Copolymerisatanteil in den durch Emulsionscopolymerisation hergestellten wäßrigen erfindungsgemäßen Copolymerisatdispersionen beträgt vorzugsweise 10 bis 50 Gew.-%, insbesondere 20 bis 40 Gew.-%.

Bei der Emulsionscopolymerisation kann es außerdem von erheblicher Bedeutung sein, ob die Monomeren als solche oder in wäßriger Emulsionsform der Copolymerisationsreaktion zugeführt beziehungsweise zudosiert werden. Einen ähnlichen bedeutsamen Einfluß hat ferner die Art der Emulgatorzugabe. So können in Abhängigkeit davon, ob der Emulgator in der wäßrige Phase vorgelegt oder während der Copolymerisation zudosiert wird, große Unterschiede hinsichtlich der Teilchengröße der Copolymerisate, der Teilchengrößenverteilung sowie der Stabilität der Copolymerisatdispersionen auftreten.

Als Komponenten der Gruppe a) kommen vorzugsweise teil- oder vollverseite wasserlösliche Polyvinylalkohole (PVA) mit Molekulargewichten zwischen etwa 2000 und etwa 250000, insbesondere etwa 10000 bis 100000, wie sie durch Alkoholyse oder Hydrolyse von Polyvinylestern, vorzugsweise von Polyvinylacetaten, erhalten werden. Bevorzugt sind vollverseifte Polyvinylalkohole, vorzugsweise solche im unteren bis mittleren Molekulargewichtsbereich. Als teilverseift gelten dabei PVA-e, bei denen zwischen 70 und 95 Mol-% der ursprünglichen Vinylestereinheiten zu Vinylalkoholeinheiten verseift sind und als vollverseift gelten PVA-e mit Verseifungsgraden von 95 bis 100 Mol-%. Besonders bevorzugt sind PVA-e mit Verseifungsgraden von 70 bis 100 Mol-%, deren 4 Gew.-%ige wäßrige Lösungen bei 20 °C Viskositäten von 3 bis 66 mPa·s, insbesondere 2 bis 10 mPa·s, gemessen im Höppler-Viskosimeter nach DIN 53015, aufweisen. Die Komponenten der Gruppe a) sind besonders bevorzugt.

Es ist erfindungswesentlich, daß die Gesamtmengen der Komponenten aus den Gruppen a) beziehungsweise a₁) bei der Emulsionscopolymerisation in der wäßrigen Phase gelöst vorgelegt oder gegebenenfalls teilweise auch während der Polymerisation in wäßriger Lösung der reaktiven Polymerisationsmischung zugesetzt werden. Rührt man statt dessen wäßrige Lösungen der Komponenten a) beziehungsweise a₁) erst nach Beendigung der Copolymerisationsreaktion in vergleichbare Copolymerisatdispersionen, die ohne Komponenten a) beziehungsweise a₁) hergestellt wurden, ein, so werden nichterfindungsgemäße Produkte mit unerwünschtem Eigenschaftsprofil erhalten, wie die Ergebnisse der Vergleichsbeispiele 5 und 6 zeigen. Hieraus geht hervor, daß die in der wäßrigen Phase des Polymerisationsansatzes gelösten Komponenten a) beziehungsweise a₁) im Verlauf der Copolymerisationsreaktion Pfropfreaktionen eingehen, wobei ihnen polymere Seitenkettenmolekülteile aufgepfropft werden, wodurch sie zumindest teilweise oder gegebenenfalls vollständig über Hauptvalenzbindungen in die molekularen Strukturen der resultierenden Copolymerisate eingebaut werden. Solche Pfropfreaktionen treten vorzugsweise bei PVA und bei Polyvinylpyrrolidon (PVP) auf und tragen entscheidend zu den unerwartet vorteilhaften Eigenschaften der resultierenden erfindungsgemäßen Copolymerisatdispersionen bei der späteren Neutralisation ihrer sauren Monomereinheiten und der damit einhergehenden Verdickerwirkung in wäßrigen Systemen bei. Bei der Neutralisation erfindungsgemäßer Copolymerisatdispersionen in der Säureform treten vor allem keine der gefürchteten unmittelbaren Gelbildungen und Vernetzungserscheinungen auf, sondern es erfolgt überraschenderweise ein glatter und rascher Übergang in die wasserlöslichen Salzformen unter Entfaltung der gewünschten Verdickerwirkung und der spezifischen rheologiemodifizierenden Eigenschaften.

Als Komponenten der Gruppe a₁) kommen vorzugsweise wasserlösliche Polyvinylpyrrolidone (PVP) infrage, insbesondere solche mit K-Werten (nach Fikentscher) von 10 bis 100, vorzugsweise 20 bis 40, ermittelt aus Viskositätsmessungen in wäßrigen Lösungen.

Die erfindungsgemäßen Copolymerisate besitzen in ihrer teilweise und/oder vollständig neutralisierten Form in wäßrigen Systemen überraschend hohe Verdickerkapazitäten. Besonders vorteilhaft und überraschend ist ihre Eigenschaft, die hohen Viskositäten in wäßrigem Milieu sowohl im niedrigen als auch im hohen Scherbereich zu entfalten, was sie unter anderem insbesondere für die Herstellung von nichtspritzenden Anstrichfarben geeignet macht. Ein weiterer wichtiger Vorteil besteht darin, daß durch geeignete Monomerenauswahl erfindungsgemäße Copolymerisate herstellbar sind, die sowohl im sauren als auch im alkalischen pH-Wert-Bereich hydrolysebeständig sind. Das vorteilhafte Eigenschaftsspektrum der erfindungsgemäßen Copolymerisate ermöglicht deren Einsatz als Verdicker in wirtschaftlicheren Aufwandmengen als beim vergleichbaren Einsatz von vergleichbaren Copolymerisaten, die zwar ebenfalls Methacrylsäureeinheiten und Acrylestereinheiten aber keine Bestandteile aus gepfropftem PVA oder gepfropftem PVP enthalten, um wäßrigen Systemen bestimmte vorteilhafte rheologische Eigenschaften zu vermitteln.

Die Wirksamkeit erfindungsgemäßer Copolymerisate als Verdicker für wäßrige Systeme ergibt sich vorzugsweise in deren teilweise oder vollständig neutralisierter Form, wobei die Neutralisation ihrer Carboxylgruppen durch Zusatz von anorganischen oder organischen Basen jeweils nach Maßgabe der Stöchiometrie erfolgt. Durch die Neutralisation werden die in ihrer nichtneutralisierten Form im allgemeinen wasserunlöslichen erfindungsgemäßen Copolymerisate in eine wasserlösliche oder eine kolloidal wasserlösliche beziehungsweise wasserdispergierbare Salzform übergeführt, in der sie ihre Verdickerwirkung in wäßrigen Systemen entfalten und diesen Systemen spezielle und stabile rheologische Eigenschaften verleihen können. Besonders bevorzugt sind die Alkali-, Ammonium- und Morpholinsalze beziehungsweise bei teilweiser Neutralisation die entsprechenden Partialsalze.

Der Einsatz der erfindungsgemäßen Copolymerisate als Verdicker für wäßrige Systeme erfolgt bevorzugt und besonders vorteilhaft in der Weise, daß man sie in ihrer nicht neutralisierten sauren Form als wenig viskose wäßrige Copolymerisat-Dispersion dem zu verdickenden wäßrigen System beimischt und anschließend das resultierende Gemisch, einschließlich aller gegebenenfalls mitverwendeten Hilfsstoffe, Zusatzmittel, Pigmente, Lackbestandteile, die bei den einzustellenden pH-Werten beständig sein müssen, durch Basenzusatz teilweise oder vollständig neutralisiert und gegebenenfalls leicht alkalisch einstellt, so daß sie ihre Verdickerwirkung und rheologiemodifizierende Wirkung unmittelbar entfalten können. Der bevorzugte pH-Bereich bei der Neutralisation mit Basen liegt bei pH 5 bis 10,5 vorzugsweise 8 bis 9,5.

Besonders bevorzugt werden die nicht neutralisierten Copolymerisate in Form von wäßrigen Copolymerisatdispersionen oder gegebenenfalls vorteilhaft auch als redispergierbare trockene Pulver, wie sie vorzugsweise durch Sprühtrocknung aus den zugrundeliegenden Copolymerisatdispersionen erhältlich sind, den zu verdickenden wäßrigen Systemen beigemischt.

Die Sprühtrocknung erfindungsgemäßer Copolymerisatdispersionen in ihrer Säureform ist bei solchen Dispersionen bevorzugt, deren Copolymerisate eine hohe Glasübergangstemperatur (T_{G}), vorzugsweise von > 40 °C, aufweisen, so daß unter den Bedingungen der Sprühtrocknung die Sprühpulver nicht verkleben können. Dispersionen von Copolymerisaten mit niedriger T_{G}, wie beispielsweise solche auf der Basis von Ethylacrylat/Methacrylsäure, deren T_{G} beispielsweise im Bereich von < -40 °C liegen kann, können daher vorteilhaft nur nach vorheriger Umwandlung in eine wasserlösliche Salzform durch Sprühtrocknung ihrer wäßrigen Lösungen in eine nicht verklebende Pulverform überführt werden.

Die minimale Filmbildungstemperatur (MFT) erfindungsgemäßer Copolymerisatdispersionen in deren Säureform hängt bekanntlich von der T_{G} der Copolymerisate ab und steigt mit zunehmendem Carboxylgruppengehalt der Copolymerisate an. So liegt beispielsweise bei den nachstehend beschriebenen Beispielen die MFT der Copolymerisatdispersionen ausnahmslos bei > 44 °C. Da bei erfindungsgemäßer Verwendung der Dispersionen als Verdickungsmittel in wäßrigen Systemen unter Umwandlung der Copolymerisate in eine wasserlösliche Salzform eine Filmbildung nicht erforderlich ist, kommt der MFT der erfindungsgemäßen Dispersionen keine weitere Bedeutung zu.

Bevorzugtes Einsatzgebiet für die erfindungsgemäßen Copolymerisate ist ihre Verwendung als Verdicker zum Verdicken und zur Viskositätseinstellung von wäßrigen Lösungen, wäßrigen Dispersionen und dispersen wäßrigen Systemen, vorzugsweise beispielsweise von wäßrigen Dispersionsanstrichfarben, Dispersionsglanzlacken, Dispersionslasuren, Textildruckpasten, Papierdruckpasten, bioziden Wirkstofflösungen und Wirkstoffdispersionen, insbesondere für den Pflanzenschutz und für die Schädlingsbekämpfung, Flüssigdüngemitteln, Emulsionsreinigern, Abbeizpasten, Enteisungsmitteln, kosmetischen Zubereitungen, Zement-, Kalk- und Gipsputzmörteln, Beton sowie Bohrspülmittel für Tiefbohrungen.

In wäßrigen Dispersionsanstrichfarben und in wäßrigen Dispersionsglanzlacken führt der Einsatz erfindungsgemäßer Copolymerisate beispielsweise besonders vorteilhaft zur Ausbildung der vom Anwender gewünschten rheologischen Eigenschaften, wie hoher high-shear-viscosity und hoher low-shear-viscosity, wobei die letztere Eigenschaft für nichtspritzende Anstrichformulierungen von Bedeutung ist. Unter hoher high-shear-viscosity werden dabei Werte, ermittelt an beispielsweise 5 Gew.-%igen wäßrigen Verdickerlösungen, zwischen 0,01 und 1 Pa·s bei einer Schergeschwindigkeit von D = 10000·s⁻¹, und unter hoher low-shear-viscosity-Werte zwischen 0,1 bis 100 Pa·s bei D = 0,1·s⁻¹ verstanden.

Die Einsatzmengen an den erfindungsgemäßen Copolymerisaten sind nicht kritisch. Sie liegen beim Einsatz als Verdicker jedoch vorzugsweise im Bereich von 0,01 bis 5 Gew.-% Copolymerisat, bezogen auf das zu verdickende wäßrige System.

Die Erfindung wird durch die nachfolgenden Beispiele näher erläutert.

### Beispiele 1 bis 12

Die Copolymerisatherstellung der Beispiele 1 bis 12 erfolgt gemäß der nachstehend beschriebenen Methode, wobei Art und Mengen der jeweils als Ausgangskomponenten eingesetzten Comonomeren und Schutzkolloide sowie der Feststoffgehalt und die Stabilität der jeweils resultierenden wäßrigen Dispersionen, die die Copolymerisate in deren Säureform enthalten, in der Tabelle 1 zusammengefaßt wiedergegeben sind.

In einer Rührapparatur, bestehend aus einem 2 l-Dreihalskolben mit Rührer, Rückflußkühler, Innenthermometer und Dosieransatz, werden jeweils die in der Tabelle 1 angegebenen Mengen entsalztes Wasser (E-Wasser) vorgelegt, diese mit 28 g einer 50 Gew.-%igen wäßrigen Lösung eines Natriumalkylarylpolyglykolethersulfats (®Hostapal BV, Hersteller: Hoechst AG) als anionischem Emulgator vermischt, der Mischung die in der Tabelle 1 angegebene Menge des jeweiligen Schutzkolloids zugesetzt und die Mischung auf 80 °C erwärmt, wobei das Schutzkolloid in Lösung geht. Dieser Lösung werden bei 80 °C ein Anteil von 10 ml einer Initiatorlösung, bestehend aus 0,49 g Ammoniumpersulfat in 50 g E-Wasser, und ein Anteil von 50 g einer Monomerenmischung aus den in der Tabelle 1 jeweils angegebenen Comonomerenmengen zugegeben und die Mischung bei 80 °C während 30 Minuten gerührt. Danach werden bei 80 °C unter weiterem Rühren der Rest der jeweiligen Monomerenmischung und der Rest der Initiatorlösung während 2 Stunden gleichmäßig zudosiert. Anschließend wird die Reaktionsmischung noch eine Stunde bei 80 °C gerührt und danach auf Raumtemperatur gebracht, wobei jeweils eine wäßrige Copolymerisatdispersion mit dem in der Tabelle 1 angegebenen Feststoffgehalt erhalten wird, in der das Copolymerisat in seiner sauren, nicht neutralisierten Form vorliegt.

Zur Charakterisierung der Verdickungswirkung wird jeweils die Viskosität einer 5 Gew.-%igen wäßrigen NH₄-Copolymerisatsalzlösung bei 23 °C nach der ISO/DIS 2555-Methode ermittelt und in der Tabelle 1 das Ergebnis als Viskositätszahl in [Pa·s] angegeben. Dabei bedeuten ansteigende Zahlenwerte zunehmende Verdickungswirkung.

### Vergleichsbeispiele 1 bis 4

Die Vergleichsbeispiele 1 und 2 werden analog den Beispielen 7 und 8 und die Vergleichsbeispiele 3 und 4 analog den Beispielen 11 und 12 ausgeführt jeweils mit der Abänderung, daß in den Vergleichsbeispielen anstelle von 263 g MMA (Beispiele 7 und 8 beziehungsweise 11 und 12) jeweils 302 g MMA und anstelle von 88 g MAS jeweils 49 g MAS eingesetzt werden. Die Mengen der eingesetzten Ausgangskomponenten sind in der Tabelle 1 zusammengefaßt wiedergegeben, ebenso der Feststoffgehalt und die Stabilität der bei den Vergleichsbeispielen erhaltenen wäßrigen Dispersionen. Wie die Werte zeigen, wird in keinem der Vergleichsbeispiele 1 bis 4 eine stabile wäßrige Copolymerisatdispersion erhalten, sondern die Reaktionsgemische koagulieren in ihrer Säureform bereits im Verlauf der Polymerisationsreaktion.

### Vergleichsbeispiele 5 und 6

Die Beispiele 1 und 2 werden wiederholt mit der Abänderung, daß das erfindungsgemäße Schutzkolloid nicht in die wäßrige Vorlage gegeben und die Emulsionscopolymerisation ohne die Anwesenheit des Schutzkolloids durchgeführt wird. Nach beendeter Copolymerisation wird die angegebene Schutzkolloidmenge, nachdem sie in dem Wasseranteil, um den die wäßrige Vorlage bei der Emulsionscopolymerisation vermindert wurde, gelöst worden ist, mit der jeweils erhaltenen schutzkolloidfreien Copolymerisatdispersion bei Raumtemperatur unter Rühren vermischt, wobei jeweils eine nichterfindungsgemäße stabile wäßrige schutzkolloidhaltige Copolymerisatdispersion erhalten wird, deren Zusammensetzung, Feststoffgehalt und Viskositätszahl in der Tabelle 1 angegeben sind. Die 5 Gew.-%igen wäßrigen NH₄-Copolymerisatsalzlösungen der Vergleichsbeispiele 5 und 6 zeigen eine überraschend geringe Verdickungswirkung vergleichsweise zu derjenigen der Beispiele 1 und 2.

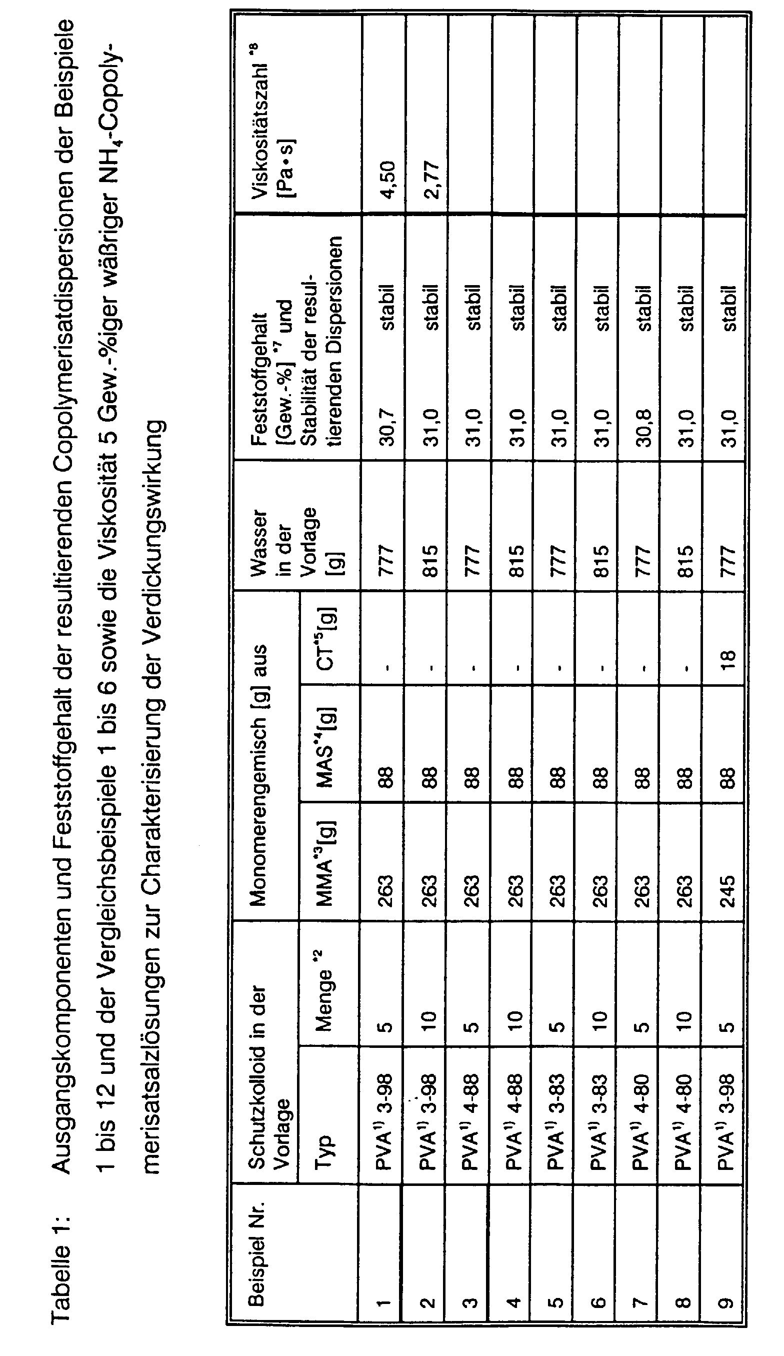

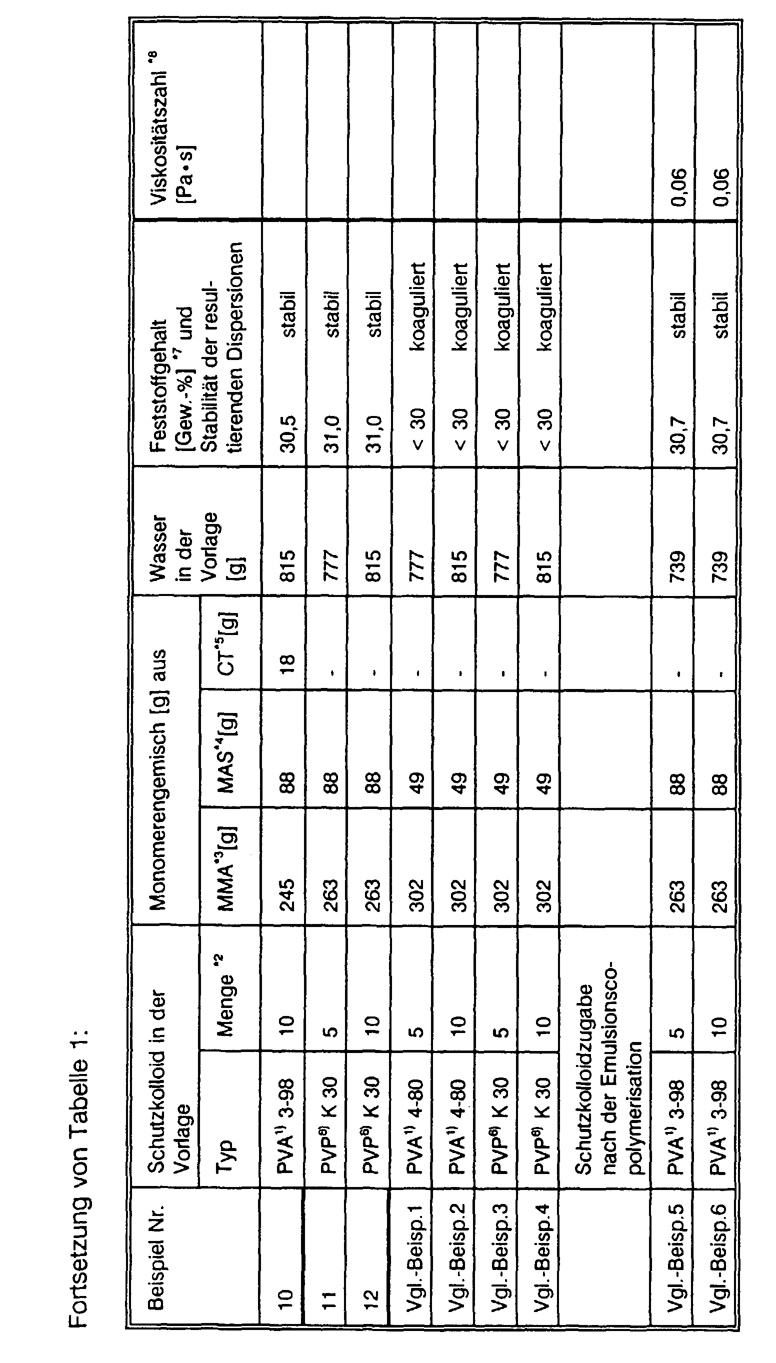

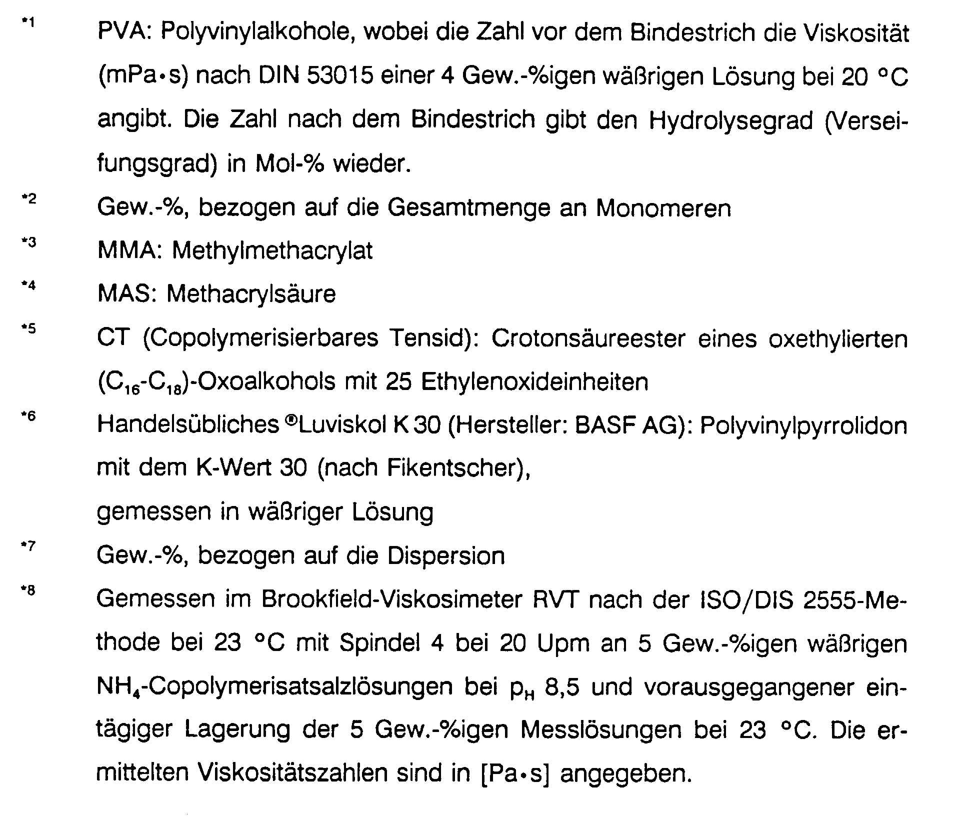

## Patentansprüche

1. Copolymerisate auf der Basis von ethylenisch ungesättigten und radikalisch copolymerisationsfähigen Monomeren, deren Makromoleküle Carboxylgruppen tragende Monomereinheiten enthalten und unter Mitverwendung von wasserlöslichem Polyvinylalkohol (PVAL) oder anderen wasserlöslichen organischen Schutzkolloiden durch radikalisch initiierte Emulsionscopolymerisation hergestellt worden sind und in einer wäßrigen Dispersionsform mit einem Feststoffgehalt von vorzugsweise 10 bis 50 Gew.-%, insbesondere 20 bis 40 Gew.-%, oder in getrockneter redispergierbarer Pulverform vorliegen, wobei die Carboxylgruppen der Copolymerisate auch teilweise oder vollständig in eine wasserlösliche Salzform überführt sein können, in der sie in wäßrigen Medien eine verdickende und rheologiemodifizierende Wirkung entfalten können, dadurch gekennzeichnet, daß sie, jeweils bezogen auf das Copolymerisat,
a) 0,1 bis 25 Gew.-%, vorzugsweise 5 bis 15 Gew.-%, Bestandteile aus wasserlöslichem Polyvinylalkohol (PVA), der bei der Copolymerisatbildung durch Pfropfpolymerisation entstandene polymere Seitenketten enthalten kann, oder aus Gemischen aus mindestens 50 Gew.-%, vorzugsweise mindestens 60 Gew.-%, bezogen auf das Gemisch, wasserlöslichem PVA, der durch Pfropfpolymerisation gebildete polymere Seitenketten enthalten kann, und einer oder mehreren der nachstehend unter 1) bis 4) genannten Komponenten, nämlich
1) wasserlöslicher modifizierter Cellulose, vorzugsweise aus der Gruppe Hydroxyethylcellulose, Carboxymethylcellulose, Carboxymethylhydroxyethylcellulose, Methylhydroxyethylcellulose, oder
2) wasserlöslichen Polymeren aus N-Vinylamidverbindungen, vorzugsweise Polyvinylpyrrolidon (PVP), das bei der Copolymerisatbildung durch Pfropfpolymerisation entstandene polymere Seitenketten enthalten kann, oder
3) wasserlöslichen polymeren, copolymeren oder blockcopolymeren Polyalkylenoxiden, vorzugsweise des Ethylenoxids und/oder des Propylenoxids, oder
4) wasserlöslichen, durch Isocyanatverbindungen modifizierten oder acetoacetoxylierten Polyvinylalkoholen, oder
a₁) anstelle der Komponente a), 0,1 bis 25 Gew.-%, vorzugsweise 5 bis 15 Gew.-%, Bestandteile aus wasserlöslichem Polyvinylpyrrolidon (PVP), das bei der Copolymerisatbildung durch Pfropfpolymerisation entstandene polymere Seitenketten enthalten kann, und
b) 21 bis 98,9 Gew.-%, vorzugsweise 25 bis 64 Gew.-%, Monomereinheiten aus Carboxylgruppen tragenden ethylenisch ungesättigten Monomeren, und
c) 1 bis 78,9 Gew.-%, vorzugsweise 30 bis 69 Gew.-%, Monomereinheiten aus Methacrylsäureestern oder Acrylsäureestern von aliphatischen (C₁-C₂₂)-Alkoholen, und
d) 0 bis 40 Gew.-%, vorzugsweise 0,1 bis 20 Gew.-%, Monomereinheiten aus ethylenisch ungesättigten Comonomeren, die von den vorgenannten Komponenten b) und c) verschieden sind, vorzugsweise (C₃-C₂₄)-Vinylestern, Vinylaromaten, ethylenisch ungesättigten Nitrilen, ethylenisch ungesättigten Monocarbonsäure-(C₁-C₂₂)-alkylestern oder Dicarbonsäuredi-(C₁-C₂₂)-alkylestern, ethylenisch ungesättigten Sulfonsäuren oder -Sulfonsäurederivaten, und
e) 0 bis 25 Gew.-%, vorzugsweise 0,1 bis 15 Gew.-%, Monomereinheiten aus ethylenisch ungesättigten grenzflächenaktiven Comonomeren, vorzugsweise grenzflächenaktiven Crotonsäureestern, und
f) 0 bis 5 Gew.-%, vorzugsweise 0,01 bis 2 Gew.-%, Monomereinheiten aus mehrfach ethylenisch ungesättgiten Comonomeren, vorzugsweise aus der Gruppe Divinylbenzol, Diallylphthalat, Butandioldiacrylat, Butandioldimethacrylat, und
g) 0 bis 5 Gew.-%, vorzugsweise 0,1 bis 1,5 Gew.-%, Molekulargewichtsregler, vorzugsweise aus der Gruppe Dodecylmercaptan, Thiophenolderivate, Tetrakismercaptoacetylpentaerythrit, Tetrachlorkohlenstoff und Bromtrichlormethan, enthalten,
und die Copolymerisate in ihrer sauren Form oder ihrer teilweisen Salzform als wäßrige Latexdispersionen oder als getrocknete redispergierbare Pulver, oder in ihrer wasserlöslichen teilweisen oder vollständigen Salzform als wäßrige Lösungen oder als wäßrige Gele oder als getrocknete wasserlösliche Pulver vorliegen.

2. Copolymerisate nach Anspruch 1, dadurch gekennzeichnet, daß sie in teilweise oder vollständig mit Alkali-, Erdalkali- oder Ammoniumbasen neutralisierter wasserlöslicher oder in Wasser kolloidal dispergierbarer Form, vorzugsweise als Natriumsalze, Kaliumsalze, Ammoniumsalze oder Morpholinsalze, vorliegen.

3. Verwendung der Copolymerisate nach Ansprüchen 1 oder 2 zum Verdicken von wäßrigen Systemen, vorzugsweise von wäßrigen Dispersionen.

4. Verwendung der Copolymerisate nach Anspruch 3 zum Verdicken von Dispersionsanstrichfarben, Dispersionsglanzlacken, Dispersionslasuren, Textildruckpasten und Papierdruckpasten, ferner von bioziden Wirkstoffdispersionen für den Pflanzenschutz und die Schädlingsbekämpfung, Flüssigdüngemitteln, Emulsionsreinigern, Abbeizpasten, Enteisungsmitteln, kosmetischen Zubereitungen, Zement-, Kalk- und Gipsputzmörteln, Beton sowie Bohrspülmittel für Tiefbohrungen.

5. Verwendung der Copolymerisate nach Ansprüchen 1 bis 4 zum Verdicken von wäßrigen Systemen, vorzugsweise wäßrigen Dispersionen, indem man die Copolymerisate in ihrer Säureform als wäßrige Dispersionen oder gegebenenfalls als redispergierbare trockene Pulver in der erforderlichen Menge mit dem zu verdickenden wäßrigen System, vorzugsweise den zu verdickenden Dispersionen, vermischt und das resultierende Gemisch anschließend durch Zusatz von Basen teilweise oder vollständig neutralisiert oder schwach alkalisch einstellt, so daß die Copolymerisate als in Wasser lösliche oder kolloidal dispergierbare oder gelbildende Copolymersalze vorliegen.

6. Verfahren zur Herstellung von Copolymerisaten nach Ansprüchen 1 oder 2 durch radikalische Copolymerisation von ethylenisch ungesättigten copolymerisationsfähigen Verbindungen in einem wäßrigen Medium bei einer Temperatur von 5 bis 100 °C, vorzugsweise 50 bis 90 °C, unter Mitverwendung von in dem vorgelegten wäßrigen Medium gelöstem wasserlöslichem Polyvinylalkohol (PVA) oder anderen wasserlöslichen organischen Schutzkolloiden, in Gegenwart von radikalbildenden Polymerisationsinitiatoren, Emulgatoren, gegebenenfalls weiteren Schutzkolloiden, gegebenenfalls Molekulargewichtsreglern und gegebenenfalls nachfolgender teilweiser oder vollständiger Neutralisation der freien Säuregruppen der Copolymerisate und Gewinnung der Copolymerisate als wäßrige Dispersionen oder als wäßrige Lösungen oder, nach Entfernung des Wasseranteils, als wasserdispergierbare oder wasserlösliche Pulver, dadurch gekennzeichnet, daß man die Ausgangsverbindungen in den nachstehenden Mengen, jeweils bezogen auf die Gesamtmenge der Ausgangskomponenten ohne den Wasseranteil einsetzt, und zwar
a) 0,1 bis 25 Gew.-%, vorzugsweise 5 bis 15 Gew.-%, wasserlöslichen Polyvinylalkohol (PVA) oder Gemische aus mindestens 50 Gew.-%, vorzugsweise mindestens 60 Gew.-%, bezogen auf das Gemisch, wasserlöslichem PVA und einer oder mehreren der nachstehend unter 1) bis 4) genannten Komponenten, nämlich
1) wasserlöslicher modifizierter Cellulose, vorzugsweise aus der Gruppe Hydroxyethylcellulose, Carboxymethylcellulose, Carboxymethylhydroxyethylcellulose, Methylhydroxyethylcellulose, oder
2) wasserlöslichen Polymeren aus N-Vinylamidverbindungen, vorzugsweise Polyvinylpyrrolidon (PVP), oder
3) wasserlöslichen polymeren, copolymeren oder blockcopolymeren Polyalkylenoxiden, vorzugsweise des Ethylenoxids und/oder des Propylenoxids, oder
4) wasserlöslichen, durch Isocyanatverbindungen modifizierten oder acetoacetylierten Polyvinylalkoholen,
gelöst in dem als Vorlage verwendeten wäßrigen Medium, vorzugsweise als 0,5 bis 15 Gew.-%ige, insbesondere 1,5 bis 10 Gew.-%ige, wäßrige Lösungen, oder
a₁) anstelle der Komponente a), 0,1 bis 25 Gew.-%, vorzugsweise 5 bis 15 Gew.-%, wasserlösliches Polyvinylpyrrolidon (PVP), gelöst in dem als Vorlage verwendeten wäßrigen Medium, vorzugsweise als 0,5 bis 15 Gew.-%ige, insbesondere 1,5 bis 10 Gew.-%ige, wäßrige Lösungen, und
b) 21 bis 98,9 Gew.-%, vorzugsweise 25 bis 64 Gew.-%, Monomere aus Carboxylgruppen tragenden ethylenisch ungesättigten copolymerisationsfähigen Verbindungen, und
c) 1 bis 78,9 Gew.-%, vorzugsweise 30 bis 69 Gew.-%, Methacrylsäureester oder Acrylsäureester von aliphatischen (C₁-C₂₂)-Alkoholen oder deren Gemische, und
d) 0 bis 40 Gew.-%, vorzugsweise 0,1 bis 20 Gew.-%, ethylenisch ungesättigte copolymerisationsfähige Verbindungen, die von den vorgenannten Komponenten b) und c) verschieden sind, vorzugsweise (C₃-C₂₄)-Vinylester, Vinylaromaten, ethylenisch ungesättigte Nitrile, ethylenisch ungesättigte Monocarbonsäure(C₁-C₂₂)-alkylester oder Dicarbonsäuredi-(C₁-C₂₂)-alkylester, ethylenisch ungesättigte Sulfonsäuren oder -Sulfonsäurederivate, und
e) 0 bis 25 Gew.-%, vorzugsweise 0,1 bis 15 Gew.-%, ethylenisch ungesättigte copolymerisationsfähige grenzflächenaktive Verbindungen, vorzugsweise Crotonsäureester, und
f) 0 bis 5 Gew.-%, vorzugsweise 0,01 bis 2 Gew.-%, mehrfach ethylenisch ungesättigte copolymerisationsfähige Verbindungen, die vernetzend wirken können, vorzugsweise aus der Gruppe Divinylbenzol, Diallylphthalat, Butandioldiacrylat, Butandioldimethacrylat, und
g) 0 bis 5 Gew.-%, vorzugsweise 0,1 bis 1,5 Gew.-%, Molekulargewichtsregler, vorzugsweise aus der Gruppe der molekulargewichtserniedrigend wirkenden Verbindungen, insbesondere Dodecylmercaptan, Thiophenolderivate, Tetrakismercaptoacetylpentaerythrit, Tetrachlorkohlenstoff und Bromtrichlormethan,
wobei man das PVA beziehungsweise PVP enthaltende wäßrige Medium a) beziehungsweise a₁), dem außerdem anionische und gegebenenfalls nichtionische Emulgatoren, gegebenenfalls weitere Schutzkolloide und radikalbildende Polymerisationsinitiatoren zugesetzt sind, in einem Rührreaktor bei der Polymerisationstemperatur vorlegt, die Komponenten b) bis g) in den erforderlichen Mengen separat oder als Mischung oder als wäßrige Emulsion nach Maßgabe des Polymerisationsverlaufs und gegebenenfalls in mehreren aufeinanderfolgenden Stufen zudosiert, gegebenenfalls zusammen mit weiteren Anteilen der Polymerisationsinitiatoren und gegebenenfalls weiteren Emulgatoranteilen, wobei wasserlösliche Ausgangsmonomere auch teilweise oder vollständig in der wäßrigen Vorlage gelöst sein können, die Copolymerisationsreaktion unter Bildung einer wäßrigen Copolymerisatdispersion zu Ende führt und die Copolymerisate in ihrer Säureform als wäßrige Dispersionen mit einem Feststoffgehalt von vorzugsweise 10 bis 50 Gew.-%, insbesondere 20 bis 40 Gew.-%, bezogen auf die wäßrige Dispersion, gewinnt, oder gegebenenfalls die letzteren durch Wasserentzug, vorzugsweise durch Sprühtrocknung, in ein trockenes redispergierbares Copolymerisatpulver überführt, oder gegebenenfalls die Dispersion durch Zusatz basischen Verbindungen, vorzugsweise Alkaliverbindungen, Ammoniak oder Morpholin, teilweise oder vollständig neutralisiert und gegebenenfalls durch Wasserentzug, vorzugsweise durch Sprühtrocknung, in trockene, teilweise oder vollständig neutralisierte wasserlösliche oder kolloidal wasserlösliche Copolymerisatpulver überführt.

## Claims

1. Copolymers based on ethylenically unsaturated monomers which can undergo free radical copolymerization, the macromolecules of which contain monomer units carrying carboxyl groups and have been prepared by emulsion copolymerization initiated by free radicals, co-using water-soluble polyvinyl alcohol (PVAL) or other water-soluble organic protective colloids, and are in an aqueous dispersion form having a solids content of preferably 10 to 50% by weight, in particular 20 to 40% by weight, or in dried redispersible powder form, it also being possible for some or all of the carboxyl groups of the copolymers to be converted into a water-soluble salt form, in which they can display a thickening and rheology-modifying action in aqueous media, characterized in that they contain, in each case based on the copolymer,
a) 0.1 to 25% by weight, preferably 5 to 15% by weight, of constituents comprising water-soluble polyvinyl alcohol (PVA), which can contain polymeric side chains formed by graft polymerization during the copolymer formation, or mixtures of at least 50% by weight, preferably at least 60% by weight, based on the mixture, of water-soluble PVA which can contain polymeric side chains formed by graft polymerization, and one or more of the components mentioned below under 1) to 4), i.e.
1) water-soluble modified cellulose, preferably from the group comprising hydroxyethylcellulose, carboxymethylcellulose, carboxymethylhydroxyethylcellulose and methylhydroxyethylcellulose, or
2) water-soluble polymers of N-vinylamide compounds, preferably polyvinylpyrrolidone (PVP), which can contain polymeric side chains formed by graft polymerization during the copolymer formation, or
3) water-soluble polymeric, copolymeric or block copolymeric polyalkylene oxides, preferably of ethylene oxide and/or of propylene oxide, or
4) water-soluble polyvinyl alcohols modified by isocyanate compounds or acetoacetoxylated, or
a₁) instead of component a), 0.1 to 25% by weight, preferably 5 to 15% by weight, of constituents comprising water-soluble polyvinylpyrrolidone (PVP), which can contain polymeric side chains formed by graft polymerization during the copolymer formation, and
b) 21 to 98.9% by weight, preferably 25 to 64% by weight, of monomer units comprising ethylenically unsaturated monomers carrying carboxyl groups, and
c) 1 to 78.9% by weight, preferably 30 to 69% by weight, of monomer units comprising methacrylic acid esters or acrylic acid esters of aliphatic (C₁-C₂₂) -alcohols, and
d) 0 to 40% by weight, preferably 0.1 to 20% by weight, of monomer units comprising ethylenically unsaturated comonomers which differ from the abovementioned components b) and c), preferably (C₃-C₂₄)-vinyl esters, vinylaromatics, ethylenically unsaturated nitriles, ethylenically unsaturated monocarboxylic acid (C₁-C₂₂)-alkyl esters or dicarboxylic acid di-(C₁-C₂₂)-alkyl esters, ethylenically unsaturated sulfonic acids or sulfonic acid derivatives, and
e) 0 to 25% by weight, preferably 0.1 to 15% by weight, of monomer units comprising ethylenically unsaturated surface-active comonomers, preferably surface-active crotonic acid esters, and
f) 0 to 5% by weight, preferably 0.01 to 2% by weight, of monomer units comprising polyethylenically unsaturated comonomers, preferably from the group comprising divinylbenzene, diallyl phthalate, butanediol diacrylate and butanediol dimethacrylate, and
g) 0 to 5% by weight, preferably 0.1 to 1.5% by weight, of molecular weight regulators, preferably from the group comprising dodecylmercaptan, thiophenol derivatives, tetrakismercaptoacetylpentaerythritol, carbon tetrachloride and bromotrichloromethane,
and in that the copolymers, in their acid form or their partial salt form, are in the form of aqueous latex dispersions or dried redispersible powders, or, in their water-soluble partial or complete salt form, are in the form of aqueous solutions or aqueous gels or dried water-soluble powders.

2. Copolymers as claimed in claim 1, characterized in that they are in a form which is water-soluble or colloidally dispersible in water and partly or completely neutralized with alkali metal bases, alkaline earth metal bases or ammonium bases, preferably as sodium salts, potassium salts, ammonium salts or morpholine salts.

3. The use of the copolymers as claimed in claim 1 or 2 for thickening aqueous systems, preferably aqueous dispersions.

4. The use of the copolymers as claimed in claim 3 for thickening emulsion paints, emulsion gloss paints, emulsion scumbles, textile printing pastes and paper printing pastes, and furthermore biocidal active compound dispersions for plant protection and pest control, liquid fertilizers, emulsion cleaners, pickling pastes, defrosting agents, cosmetic formulations, cement, lime and gypsum plaster mortars, concrete and drilling flushing agents for deep bores.

5. The use of the copolymers as claimed in claims 1 to 4 for thickening aqueous systems, preferably aqueous dispersions, by a procedure in which the copolymers are mixed in their acid form as aqueous dispersions or, if appropriate, as redispersible dry powders in the required amounts with the aqueous system to be thickened, preferably the dispersions to be thickened, and the resulting mixture is then partly or completely neutralized or rendered weakly alkaline by addition of bases so that the copolymers are present as copolymer salts which are soluble or colloidally dispersible or gel-forming in water.

6. A process for the preparation of copolymers as claimed in claim 1 or 2 by free radical copolymerization of ethylenically unsaturated copolymerizable compounds in an aqueous medium at a temperature of 5 to 100°C, preferably 50 to 90°C, co-using water-soluble polyvinyl alcohol (PVA) or other water-soluble organic protective colloids dissolved in the aqueous medium initially introduced into the reaction vessel, in the presence of polymerization initiators which form free radicals, emulsifiers, if appropriate further protective colloids and if appropriate molecular weight regulators, and if appropriate subsequent partial or complete neutralization of the free acid groups of the copolymers and isolation of the copolymers as aqueous dispersions or as aqueous solutions or, after removal of the water content, as water-dispersible or water-soluble powders, characterized in that the starting compounds are employed in the following amounts, in each case based on the total amount of starting components without the water content, and in particular
a) 0.1 to 25% by weight, preferably 5 to 15% by weight, of water-soluble polyvinyl alcohol (PVA) or mixtures of at least 50% by weight, preferably at least 60% by weight, based on the mixture, of water-soluble PVA and one or more of the components mentioned below under 1) to 4), i.e.
1) water-soluble modified cellulose, preferably from the group comprising hydroxyethylcellulose, carboxymethylcellulose, carboxymethylhydroxyethylcellulose and methylhydroxyethylcellulose, or
2) water-soluble polymers of N-vinylamide compounds, preferably polyvinylpyrrolidone (PVP), or
3) water-soluble polymeric, copolymeric or block copolymeric polyalkylene oxides, preferably of ethylene oxide and/or of propylene oxide, or
4) water-soluble polyvinyl alcohols modified by isocyanate compounds or acetoacetylated,
dissolved in the aqueous medium used as the initial mixture, preferably as 0.5 to 15% strength by weight, in particular 1.5 to 10% strength by weight, aqueous solutions, or
a₁) instead of component a), 0.1 to 25% by weight, preferably 5 to 15% by weight, of water-soluble polyvinylpyrrolidone (PVP), dissolved in the aqueous medium used as the initial mixture, preferably as 0.5 to 15% strength by weight, in particular 1.5 to 10% strength by weight, aqueous solutions, and
b) 21 to 98.9% by weight, preferably 25 to 64% by weight, of monomers comprising ethylenically unsaturated copolymerizable compounds carrying carboxyl groups, and
c) 1 to 78.9% by weight, preferably 30 to 69% by weight, of methacrylic acid esters or acrylic acid esters of aliphatic (C₁-C₂₂)-alcohols or mixtures thereof, and
d) 0 to 40% by weight, preferably 0.1 to 20% by weight, of ethylenically unsaturated copolymerizable compounds which differ from the abovementioned components b) and c), preferably (C₃-C₂₄)-vinyl esters, vinylaromatics, ethylenically unsaturated nitriles, ethylenically unsaturated monocarboxylic acid (C₁-C₂₂)-alkyl esters or dicarboxylic acid di-(C₁-C₂₂)-alkyl esters or ethylenically unsaturated sulfonic acids or sulfonic acid derivatives, and
e) 0 to 25% by weight, preferably 0.1 to 15% by weight, of ethylenically unsaturated copolymerizable surface-active compounds, preferably crotonic acid esters, and
f) 0 to 5% by weight, preferably 0.01 to 2% by weight, of polyethylenically unsaturated copolymerizable compounds which can have a crosslinking action, preferably from the group comprising divinylbenzene, diallyl phthalate, butanediol diacrylate and butanediol dimethacrylate, and
g) 0 to 5% by weight, preferably 0.1 to 1.5% by weight, of molecular weight regulators, preferably from the group comprising compounds having a molecular weight-lowering action, in particular dodecylmercaptan, thiophenol derivatives, tetrakismercaptoacetylpentaerythritol, carbon tetrachloride and bromotrichloromethane,
wherein the aqueous medium a) or a₁) containing PVA or PVP, to which anionic and if appropriate nonionic emulsifiers and if appropriate further protective colloids and polymerization initiators which form free radicals furthermore are added, is initially introduced into a stirred reactor at the polymerization temperature, components b) to g) are metered in separately or as a mixture or as an aqueous emulsion in the required amounts according to the progress of the polymerization and if appropriate in several successive stages, if appropriate together with further portions of the polymerization initiators and if appropriate further emulsifier portions, it also being possible for water-soluble starting monomers to be partly or completely dissolved in the aqueous initial mixture, the copolymerization reaction is brought to completion to form an aqueous copolymer dispersion and the copolymers are isolated in their acid form as aqueous dispersions having a solids content of preferably 10 to 50% by weight, in particular 20 to 40% by weight, based on the aqueous dispersions, or if appropriate the dispersions are converted into dry redispersible copolymer powders by removal of water, preferably by spray drying, or if appropriate the dispersions are partly or completely neutralized by addition of basic compounds, preferably alkali compounds, ammonia or morpholine, and if appropriate are converted into dry, partly or completely neutralized water-soluble or colloidally water-soluble copolymer powders by removal of water, preferably by spray drying.

## Revendications

1. Copolymères à base de monomères copolymérisables par voie radicalaire et à insaturation éthylénique, dont les macromolécules contiennent des motifs monomères porteurs de groupes carboxyle et en utilisant conjointement du poly(alcool vinylique) (PVAL) hydrosoluble ou d'autres colloïdes protecteurs organiques hydrosolubles, que l'on prépare par copolymérisation en émulsion à amorce radicalaire, et qui se présentent sous forme d'une dispersion aqueuse ayant une teneur en matières solides de préférence de 10 à 50 % en poids, plus particulièrement de 20 à 40 % en poids, ou sous forme pulvérulente redispersable sèche, les groupes carboxyle des copolymères pouvant aussi être transformés entièrement ou partiellement en une forme salifiée hydrosoluble, dans laquelle ils peuvent développer un effet modifiant la rhéologie et un effet épaississant dans les milieux aqueux, caractérisés en ce qu'ils contiennent, chaque fois par rapport au copolymère,
a) 0,1 à 25 % en poids, de préférence 5 à 15 % en poids de composants constitués de poly(alcool vinylique) (PVA) hydrosoluble qui peut contenir des chaînes latérales polymères formées par polymérisation par greffage lors de la copolymérisation, ou bien des mélanges d'au moins 50 % en poids, de préférence d'au moins 60 % en poids par rapport au mélange, de PVA hydrosoluble, qui peut contenir des chaînes latérales polymères formées par polymérisation par greffage, et d'un ou plusieurs des constituants énumérés aux points 1) à 4) ci-après, à savoir
1) la cellulose modifiée hydrosoluble, de préférence prise dans le groupe comportant l'hydroxyéthylcellulose, la carboxyméthylcellulose, la carboxyméthylhydroxyéthylcellulose, la méthylhydroxyéthylcellulose, ou
2) des polymères hydrosolubles des composés de N-vinylamide, de préférence la polyvinylpyrrolidone (PVP), qui peut contenir des chaînes latérales polymères formées par polymérisation par greffage lors de la formation du copolymère, ou
3) des oxydes de polyalkylènes de type copolymère séquencé, copolymère ou polymère hydrosoluble, de préférence de l'oxyde d'éthylène et/ou de l'oxyde de propylène, ou
4) des poly(alcools vinyliques) acétoacétoxylé ou modifié par des composés isocyanato hydrosolubles, ou
a₁) au lieu du composant a), 0,1 à 25 % en poids, de préférence 5 à 15 % en poids, de composants constitués de polyvinylpyrrolidone (PVP) hydrosoluble, qui peut contenir des chaînes latérales polymères formées par polymérisation par greffage au cours de la formation du copolymère, et
b) 21 à 98,9 % en poids, de préférence 25 à 64 % en poids de motifs monomères de monomères à insaturation éthylénique porteurs de groupes carboxyle, et
c) 1 à 78,9 % en poids, de préférence 30 à 69 % en poids de motifs monomères d'esters de l'acide méthacrylique ou d'esters de l'acide acrylique et d'alcools aliphatiques en C₁-C₂₂, et
d) 0 à 40 % en poids, de préférence 0,1 à 20 % en poids de motifs monomères de comonomères à insaturation éthylénique, qui sont différents des composants b) et c) précités, de préférence des esters vinyliques en C₃-C₂₄, des composés vinylaromatiques, des nitriles à insaturation éthylénique, des esters d'alkyles en C₁-C₂₂ d'acides dicarboxyliques ou des esters d'alkyles en C₁-C₂₂ d'acides monocarboxyliques à insaturation éthylénique, des acides sulfoniques à insaturation éthylénique ou des dérivés des acide sulfoniques à insaturation éthylénique, et
e) 0 à 25 % en poids, de préférence 0,1 à 15 % en poids de motifs monomères de comonomères tensio-actifs à insaturation éthylénique, de préférence d'esters tensio-actifs de l'acide crotonique, et
f) 0 à 5 % en poids, de préférence 0,01 à 2 % en poids de motifs monomères de comonomères à insaturation éthylénique multiple, de préférence pris dans le groupe comportant le divinylbenzène, le phtalate de diallyle, le diacrylate de butanediol, le diméthacrylate de butanediol, et
g) 0 à 5 % en poids, de préférence 0,1 à 1,5 % en poids de régulateurs de poids moléculaire, de préférence pris dans le groupe comportant le dodécylmercaptan, des dérivés de thiophénol, le tétrakismercaptoacétyl-pentaérythritol, le tétrachlorocarbone et le bromotrichlorométhane,
et les copolymères étant présents sous forme acide ou sous forme partiellement salifiée en tant que dispersions aqueuses de latex ou en tant que poudres sèches, redispersables, ou en tant que solutions aqueuses de leurs formes partiellement ou entièrement salifiées, hydrosolubles, ou encore en tant que gels aqueux, ou bien poudres sèches, hydrosolubles.

2. Copolymères selon la revendication 1, caractérisés en ce qu'ils sont présents partiellement ou entièrement neutralisés par des bases d'alcalis, de métaux alcalino-terreux ou d'ammonium, sous une forme hydrosoluble ou dispersable sous forme colloïdale dans l'eau, de préférence comme sels de sodium, de sels de potassium, de sels d'ammonium ou de sels de morpholine.

3. Utilisation des copolymères selon la revendication 1 ou 2, pour épaississir des systèmes aqueux, de préférence des dispersions aqueuses.

4. Utilisation des copolymères selon la revendication 3, pour épaississir des peintures en dispersion, des vernis brillants en dispersion, des glacis en dispersion, des pâtes d'impression de textile et de pâtes d'impression de papier, en outre de dispersions de principes actifs biocides pour la phytoprotection et la lutte contre les ravageurs, des engrais liquides, des produits de nettoyage émulsionnés, des pâtes de décapage, des produits de dégivrage, des préparations cosmétiques, des mortiers de ciment, de chaux et de plâtre, du béton, ainsi que des fluides de forage pour forages en profondeur.

5. Utilisation des copolymères selon les revendications 1 à 4, pour épaississir des systèmes aqueux, de préférence des dispersions aqueuses, par mélange des copolymères sous leur forme acide en tant que dispersions aqueuses ou éventuellement sous forme de poudre sèche, redispersable, dans les quantités requises, aux systèmes aqueux à épaissir, de préférence aux dispersions aqueuses à épaissir, et en neutralisant partiellement ou entièrement le mélange résultant par ajout de bases ou par établissement d'un pH légèrement alcalin, de sorte que les copolymères se présentent sous forme salifiée de copolymères formant des gels ou solubles dans l'eau ou dispersables sous forme colloïdale.

6. Procédé pour la préparation de copolymères selon les revendications 1 ou 2 par copolymérisation radicalaire de composés copolymérisables à insaturation éthylénique dans un milieu aqueux à une température de préférence de 5 à 100 °C, plus particulièrement de 50 à 90 °C, en utilisant conjointement l'alcool polyvinylique (PVA) hydrosoluble ou d'autres colloïdes protecteurs organiques hydrosolubles dissous dans le milieu aqueux introduit préalablement, en présence d'amorceurs de polymérisation formateurs de radicaux, d'émulsionnants, éventuellement d'autres colloïdes protecteurs, éventuellement de régulateurs de poids moléculaire, et éventuellement par neutralisation ultérieure partielle ou complète des groupes acides libres des copolymères et l'obtention des copolymères sous forme de dispersions ou de solutions aqueuses, ou après avoir éliminé le taux d'eau, sous forme de poudres hydrosolubles ou dispersables dans l'eau, caractérisé en ce que l'on utilise comme composé de départ dans les quantités indiquées ci-après, chaque fois par rapport à la quantité totale des composés de départ dont on déduit le taux en eau, c'est-à-dire
a) 0,1 à 25 % en poids, de préférence 5 à 15 % en poids de poly(alcool vinylique) (PVA) hydrosoluble ou des mélanges d'au moins 50 % en poids,. de préférence d'au moins 60 % en poids par rapport au mélange, de PVA hydrosoluble et d'un ou plusieurs des composants aux points 1) à 4), cités ci-après,
1) la cellulose modifiée hydrosoluble, de préférence prise dans le groupe comportant l'hydroxyéthylcellulose, la carboxyméthylcellulose, la carboxyméthylhydroxyéthylcellulose, la méthylhydroxyéthylcellulose, ou
2) des polymères hydrosolubles des composés de N-vinylamide, de préférence la polyvinylpyrrolidone (PVP), ou
3) des oxydes de polyalkylènes de type copolymère séquencé, copolymère ou polymère hydrosoluble, de préférence de l'oxyde d'éthylène et/ou de l'oxyde de propylène, ou
4) des poly(alcools vinyliques) acétoacétylés ou modifiés par des composés isocyanato hydrosolubles,
dissous dans le milieu aqueux introduit préalablement, de préférence sous forme de solutions aqueuses de 0,5 à 15 % en poids, plus particulièrement de 1,5 à 10 % en poids, ou
2) des polymères hydrosolubles des composés de N-vinylamide, de préférence la polyvinylpyrrolidone (PVP), qui peut contenir des chaînes latérales polymères formées par polymérisation par greffage lors de la formation du copolymère, ou
3) des oxydes de polyalkylènes de type copolymère séquencé, copolymère ou polymère hydrosoluble, de préférence de l'oxyde d'éthylène et/ou de l'oxyde de propylène, ou
4) des poly(alcools vinyliques) acétoacétoxylés ou modifiés par des composés isocyanato, hydrosolubles, ou
a₁) au lieu du composant a), 0,1 à 25 % en poids, de préférence 5 à 15 % en poids, de composants constitués de polyvinylpyrrolidone (PVP) hydrosoluble, qui peut contenir des chaînes latérales polymères formées par polymérisation par greffage au cours de la formation du copolymère, et
b) 21 à 98,9 % en poids, de préférence 25 à 64 % en poids de motifs monomères en monomères à insaturation éthylénique porteurs de groupes carboxyle, et
c) 1 à 78,9 % en poids, de préférence 30 à 69 % en poids de motifs monomères d'esters de l'acide méthacrylique ou d'esters de l'acide acrylique et d'alcools aliphatiques en C₁-C₂₂, et
d) 0 à 40 % en poids, de préférence 0,1 à 20 % en poids de motifs monomères de comonomères à insaturation éthylénique, qui sont différents des composants b) et c) précités, de préférence des esters vinyliques en C₃-C₂₄, des composés vinylaromatiques, des nitriles à insaturation éthylénique, des esters d'alkyles en C₁-C₂₂ d'acides dicarboxyliques ou des esters d'alkyles en C₁-C₂₂ d'acides monocarboxyliques à insaturation éthylénique, des acides sulfoniques à insaturation éthylénique ou des dérivés d'acides sulfoniques à insaturation éthylénique, et
pris dans le groupe des composés ayant un effet réducteur sur le poids moléculaire, notamment comportant le dodécylmercaptan, des dérivés de thiophénol, le tétrakismercaptoacétylpentaérythritol, le tétrachlorocarbone et le bromotrichlorométhane, en introduisant préalablement le milieu aqueux a), respectivement a₁), contenant le PVA, respectivement le PVP, auquel on ajoute, en outre, des émulsionnants anioniques et éventuellement non-ioniques, éventuellement d'autres colloïdes protecteurs et des amorceurs de polymérisation formateurs de radicaux, dans un réacteur agité, à la température de polymérisation, en ajoutant progressivement les composants b) à g) dans les quantités requises, séparément ou sous forme de mélange ou en tant qu'émulsions aqueuses conformément au déroulement de la polymérisation et éventuellement en plusieurs étapes successives, éventuellement conjointement avec d'autres portions d'amorceurs de polymérisation, et éventuellement avec d'autres quantités d'émulsionnants, les monomères de départ hydrosolubles pouvant être dissous partiellement ou entièrement dans le milieu aqueux introduit préalablement, en conduisant jusqu'à la fin la réaction de copolymérisation en formant une dispersion de copolymère aqueuse, et en obtenant les copolymères sous leur forme acide en tant que dispersions aqueuses ayant une teneur en matières solides de préférence de 10 à 50 % en poids, plus particulièrement de 20 à 40 % en poids par rapport à la dispersion aqueuse, ou éventuellement en transformant ces derniers par élimination d'eau, de préférence par séchage par pulvérisation, en une poudre copolymère sèche, redispersable, ou bien éventuellement en neutralisant partiellement ou entièrement la dispersion par ajout de composés basiques, de préférence de composés d'alcalins, d'ammoniac ou de morpholine, et éventuellement en éliminant l'eau, en transformant de préférence par séchage par pulvérisation, en poudres de copolymères hydrosolubles ou hydrosolubles sous forme colloidale.
